# EUROPÄISCHE PATENTSCHRIFT

(11) **EP 0 875 311 B1**
(45) Veröffentlichungstag und Bekanntmachung des Hinweises auf die Patenterteilung: **14.03.2001**
(21) Anmeldenummer: 98107074.1
(22) Anmeldetag: 17.04.1998
(51) Int. Cl.: B21D 35/00, B23Q 37/00, B23P 23/00

(54) **Maschine zum Stanzen, Biegen und Montieren von Blechteilen**
Machine for punching, bending and assembling of sheet metal parts
Dispositif de poinçonnage, de cintrage et d'assemblage des parts en tôle

(30) Priorität: 29.04.1997 DE 19718032
(43) Veröffentlichungstag der Anmeldung: 04.11.1998
(73) Patentinhaber: Garth, Harald, 87509 Immenstadt (DE)
(72) Erfinder: Garth, Harald, 87509 Immenstadt (DE)
(74) Vertreter: Hübner, Hans-Joachim, Dipl.-Ing.

(56) Entgegenhaltungen:
- EP-A- 0 103 885
- DE-A- 4 435 282
- DE-A- 19 535 949

## Beschreibung

Die Erfindung betrifft eine Maschine zum Stanzen, Biegen und Montieren von Blechteilen mit einer oberen Reihe von Gehäuseteilen und einer unteren Reihe von Gehäuseteilen, wobei die oberen und die unteren Gehäuseteile jeweils horizontal ausgerichtet, aneinander befestigt sind und jeweils ein oberes Gehäuseteil mit einem unteren Gehäuseteil lotrecht ausgefluchtet ist, weiterhin mit einer, die oberen Gehäuseteile durchsetzenden und in diesen gelagerten oberen Antriebswelle und einer entsprechenden unteren Antriebswelle und mit mindestens einem, mit der jeweiligen Antriebswelle gekuppelten oder kuppelbaren Winkelgetriebe in jedem Gehäuseteil und mit mindestens einem Schlittenaggregat nebst Schlittenführung an jedem Gehäuseteil, wobei das Schlittenaggregat mit einer Abtriebswelle des Winkelgetriebes in Antriebseingriff steht.

Eine derartige Maschine ist aus der EP-A-0 103 885 bekannt. Die länglich ausgebildeten oberen und unteren Gehäuseteile werden durch endseitige Abstandskörper zu einem Rahmen miteinander verbunden. An der Frontseite und der Rückseite jedes Gehäuseteils ist eine Anzahl Schlittenaggregate befestigt. In den Gehäuseteilen befinden sich Schneckenwellen, die stirnseitig mit den Gehäuseteilen abschließen. Mehrere solcher Gehäuserahmen können stirnseitig miteinander verbunden werden, wobei die Verbindung der Antriebswellen mittels Bogenzahnkupplungen erfolgt.

Einen ähnlichen Stand der Technik zeigt die DE-A-1 95 35 949, jedoch erstrecken sich hier die Gehäuseteile zwischen zwei lotrechten Abschlußholmen und eine stirnseitige Aneinanderreihung mehrerer Gehäuseteile ist nicht vorgesehen.

Aus der EP-A-0 127 156 ist ebenfalls eine ähnliche Maschine bekannt, bei der das Gehäuse zwei Horizontalträger und zwei Vertikalträger aufweist, wobei in allen vier Trägern fest angeordnete Drehmoment-Zapfstellen zum Kuppeln mit Schlittenaggregaten vorgesehen sind.

Die DE-C 40 10 115 zeigt eine Maschine zum Stanzen, Biegen und Montieren, die sich jedoch von der gattungsgemäßen Maschine dadurch unterscheidet, daß Gehäuse mit geschlossenen Frontplatten verwendet werden, wobei im Gehäuse ein Zentralrad gelagert ist, mit dessen Umfang eine Vielzahl sternförmig angeordneter Schlittenaggregate in Antriebseingriff steht. Mehrere solcher Maschinengehäuse können bausteinartig aneinander gesetzt werden. Eine Sychronisierung der Zentralräder in den einzelnen Maschinengehäusen und noch mehr deren sternförmig angeordneter und radial arbeitender Schlittenaggregate ist wegen der notwendigen Winkelgetriebe und Kupplungen problematisch.

Je nach der Art des herzustellenden Produktes ist die Zahl der nacheinander vorzunehmenden Biegevorgänge unterschiedlich. Häufig wird der Biegeeinrichtung eine Stanzeinrichtung vorgeschaltet, manchmal wird letztere jedoch nicht benötigt. Für einfache Biegeteile sind die bekannten Maschinen zu groß, da sie für acht oder mehr Schlittenaggregate bzw. ein Mehrfaches davon ausgelegt sind. Auch wenn bei solchen Maschinen nicht alle Positionen mit Schlittenaggregaten besetzt sind, laufen doch überwiegend auch die nicht benötigten Winkelgetriebe mit, sodaß Energieverbrauch und Verschleiß unnötig hoch sind.

Aufgabe der Erfindung ist es, die Maschine der eingangs genannten Art dahingehend zu verbessern, daß sie für das jeweils herzustellende Produkt eine minimale Baugröße erhält, die sich aber leicht ändern läßt, um mit ihr andere Produkte herstellen zu können.

Diese Aufgabe wird bei einer Maschine mit den Merkmalen der eingangs genannten Art dadurch gelöst, daß je ein oberes und ein unteres Gehäuseteil Bestandteile eines einheitlichen Gehäusekastens mit minimal möglicher Breite sind, dessen Frontseite nicht mehr als ein oberes und ein unteres Schlittenaggregat zugeordnet sind, daß die Breite des Gehäuses im Bereich von 0 bis höchstens etwa 20% größer als die Außenbreite der Schlittenführung des Schlittenaggregates ist, daß in der Frontwand des Gehäusekastens zwischen der oberen und der unteren Schlittenführung eine rechteckige umfangsgeschlossene Werkzeugaufnahmefläche ausgebildet ist, daß die Antriebswelle des Winkelgetriebes in Breitenmitte des Gehäuses angeordnet ist, daß jedes Winkelgetriebe ein Antriebs- und ein Abtriebsrad aufweist, daß die beiden Antriebswellen die Antriebsräder der Winkelgetriebe der miteinander verschraubten Gehäusekästen jeweils durchsetzen und die Länge der Antriebswellen - abgesehen von einem für deren Drehantrieb notwendigen Übermaß - dem Produkt aus Breite und Anzahl der miteinander verschraubten Gehäusekästen entspricht.

Der Erfindung liegt die Erkenntnis zugrunde, daß ein Schlittenhub von maximal 40 mm für den allergrößten Teil der in der Praxis auftretenden Anwendungsfälle ausreichend ist. Die Kurvenscheiben der Schlittenaggregate bestimmen deren Breite. Gemäß der Erfindung hat nun ein Gehäusekasten die minimal mögliche Breite, die bei einem Schlittenhub von 40 mm ca. 180 mm beträgt. Für einfachste Biegeteile, die nicht mehr als zwei Biegeoperationen benötigen, ist der Raumbedarf der Biegeeinrichtung in der Breite also kleiner als 200 mm. Da die Gehäusekästen nur noch die Lagerungen für die Antriebswellen und die Winkelgetriebe aufzuweisen braucht, können auch die Dimensionen für die Tiefe und die Höhe des Gehäusekastens minimiert werden. Eine Tiefe von 270 mm und eine Höhe von 1100 mm reichen in der Praxis aus. Damit sind die Gehäusekästen leicht handhabbar, sodaß beim Umrüsten auf ein anderes Produkt mehrere Gehäusekästen leicht aneinandergereiht und auch wieder in der Zahl reduziert werden können, da die Verbindung der Gehäusekästen durch Verwendung einfacher Maschinenschrauben erfolgt. Da die Antriebswellen durchgehend sind, müssen lediglich kürzere Antriebswellen durch entsprechend längere Antriebswellen oder umgekehrt ausgetauscht werden. Wenn die Antriebsräder gemäß einer bevorzugten Ausgestaltung im Gehäusekasten gelagert sind, kann deren Kupplung mittels einschiebbarer und ausziehbarer Steckwellen erfolgen. Da der Drehantrieb der Antriebswellen vorzugsweise von einer oder beiden Stirnseiten der Gehäusekastenreihe erfolgt, ist kein spezieller Unterbau z.B. mit Antrieben, Schalteinrichtungen u. dergl. für die Maschine erforderlich, da die Gehäusekästen lediglich auf einer ebenen Unterlage aufgestellt oder auch liegend angeordnet werden können.

Die Erfindung ermöglicht aber auch die Bestückung der Schlittenaggregate mit Kurvenscheiben, die über die schmalen Gehäusekästen vorstehen, indem gemäß einer weiteren Ausgestaltung der Erfindung zwischen zwei benachbarten Gehäusekästen ein ggf. zweiteiliger Distanzblock eingeschraubt wird. Dadurch vergrößert sich der Abstand der Abtriebswellen benachbarter Gehäusekästen, sodaß auch Schlittenhübe von 50 mm und mehr durchgeführt werden können. Solche einfach zwischenzuschaltenden Distanzblöcke erlauben auch eine genaue Raster- und Schnittlängenanpassung, die durch Verformung der Werkstücke während der Bearbeitung erforderlich werden.

Weitere Vorteile der Erfindung werden noch dadurch erreicht, daß die Schlittenführungen jeweils als direkt auf die Frontwand des Gehäusekastens aufgeschraubte Führungsleisten ausgebildet sind. Ebenso dient die Werkzeugaufnahmefläche zur direkten Aufnahme einer Werkzeuggrundplatte.

Schließlich bestehen noch vorteilhafte Ausgestaltungen der Erfindung darin, daß die Gehäusekästen auf der der Frontwand gegenüber liegenden Rückseite offen sind oder die so gebildete Öffnung von einer Abdeckplatte geschlossen ist. In beiden Fällen sind die Gehäusekästen von der Rückseite her zugänglich, wodurch das Verschrauben benachbarter Gehäusekästen sehr einfach wird.

Die Maschine hat gemäß einer weiteren Ausgestaltung eine vordere und eine hintere Gehäusekastenreihe, wobei je ein vorderer Gehäusekasten mit einem hinteren Gehäusekasten mittels deck- und bodenseitiger Verbindungsplatten miteinander verschraubt sind. Alternativ können auch über die ganze Länge der Gehäusekastenreihe reichende Verbindungsplatten verwendet werden. Beide Gehäusekastenreihen weisen eigene Antriebsmotoren auf, die vorzugsweise an gegenüberliegenden Stirnseiten angeflanscht sind.

Anhand der Zeichnung, die Ausführungsbeispiele der Erfindung darstellt, wird diese näher beschrieben.

Es zeigt:
- FIG. 1: einen mittigen Vertikalschnitt durch einen Gehäusekasten,
- FIG. 2: eine Frontansicht zweier miteinander verschraubter Gehäusekästen,
- FIG. 3: die Frontansicht einer Maschine mit drei verschraubten Gehäusekästen, einem Getriebekasten und dem motorischen Antrieb,
- FIG. 4: die Frontansicht einer Maschine mit beidseitigen unabhängigen Antriebszügen, zwei Pressen und vier Gehäusekästen als Biegeeinrichtungen,
- FIG. 5: eine vertikale Schnittansicht durch ein Paar vorderer und hinterer Gehäusekästen,
- FIG. 6: eine Draufsicht auf eine Maschine ähnlich FIG. 5 mit jeweils vier Gehäusekästen als Biegeeinrichtungen und einem Verteilgetriebekasten,
- FIG. 7: eine vertikale Schnittansicht durch die obere Hälfte eines Gehäusekastens mit vereinfachtem Winkelgetriebe, und
- FIG. 8: eine Draufsicht auf drei miteinander verbundene Gehäusekästen in der Ausführung gemäß FIG. 7.

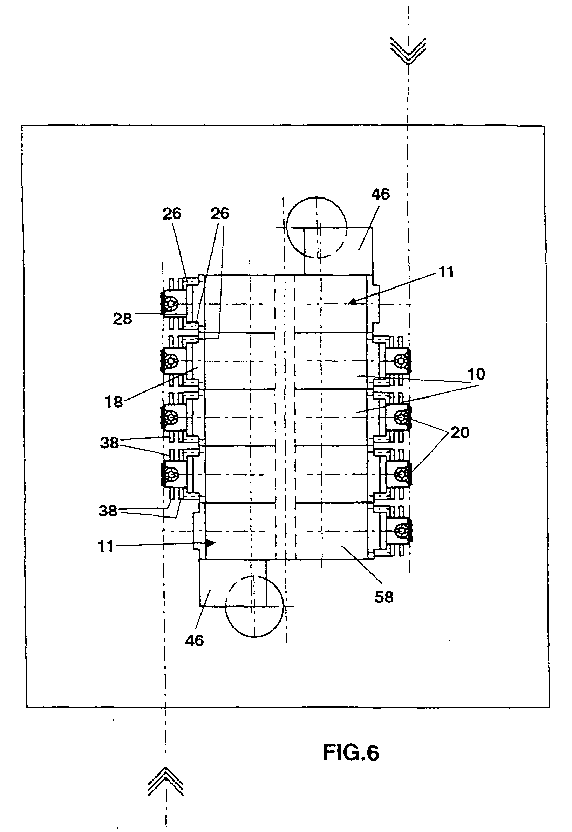

Ein Gehäusekasten 10 ist spiegelbildlich zu einer mittleren Horizontalebene 12 ausgebildet und weist ein oberes Gehäuseteil 14 und ein unteres Gehäuseteil 16 auf, die beide einstückig verbunden sind. Der Gehäusekasten 10 wird aus einem Block aus Stahlguß, Ferroguß oder Leichtmetallguß kostengünstig hergestellt, und zwar nach der Flächenbearbeitung der Bodenfläche in einer Aufspannung hochgenau gefräst. Dabei wird die Frontwand 18 so bearbeitet, daß Teile von Schlittenaggregaten 20 und Lagerungen für die Abtriebswellen 22 von Winkelgetrieben 24 dem Gehäusekasten 10 zugeordnet werden. So sind die Schlittenführungen 26 in Form von Führungsleisten für den Schlitten 28 (FIG. 6) an der Frontwand 18 jedes Gehäusekastens 10 formschlüssig angesetzt und angeschraubt. Ebenso ist im Bereich der mittleren horizontalen Symmetrieebene 12 eine Werkzeugaufnahmefläche 30 eingefräst, die zur formschlüssigen Aufnahme einer Werkzeuggrundplatte 32 eines Werkzeuges 34 dient, wobei auch die Werkzeuggrundplatte 32 an der Frontwand 18 angeschraubt ist.

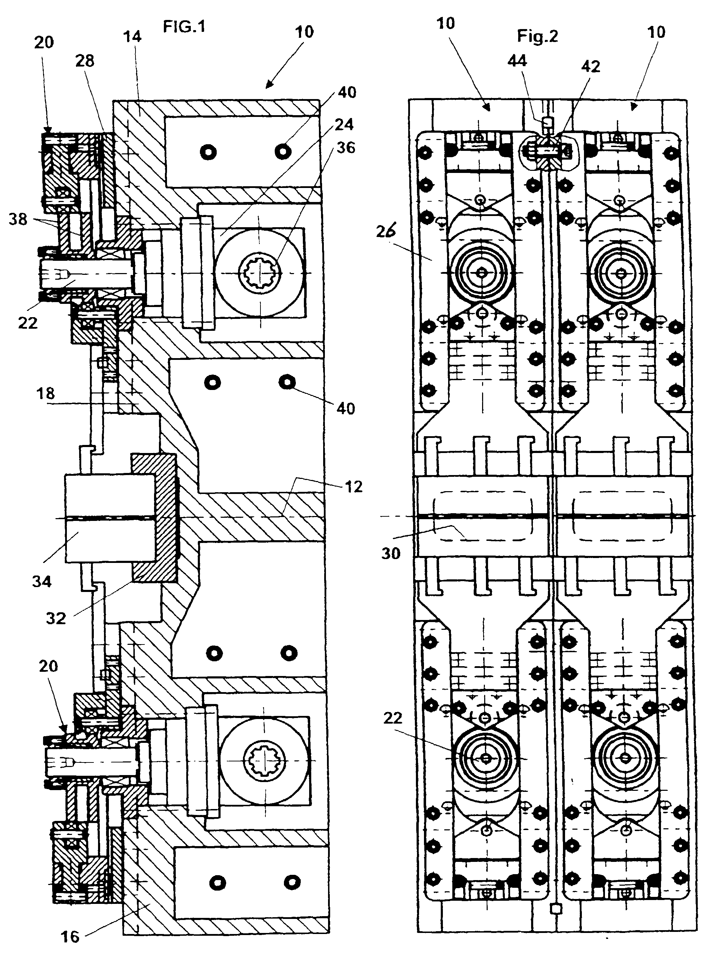

Bei der Ausführung gemäß Figuren 1-6 ist in jeden Gehäusekasten 10 ein oberes und ein unteres Getriebegehäuse eingesetzt, das jeweils das Winkelgetriebe 24 enthält. Das Getriebegehäuse lagert das Antriebsrad 36 des Winkelgetriebes 24. Das Antriebsrad 36 hat eine Nabenbohrung unrunden Querschnitts. In den Ausführungen ist die Nabenbohrung zum Einstecken einer Antriebswelle mit Vielkeilwellenquerschnitt ausgebildet. Alternativ können die Nabenbohrungen Einzelnuten für Keilnutwellen aufweisen oder zum formschlüssigen Einstecken von Polygonwellen ausgebildet sein. Die Gehäusekästen 10 haben eine Breite, die gerade so groß ist, daß die auf den Abtriebswellen 22 montierten Kurvenscheiben 38 benachbarter Gehäusekästen 10 nicht aneinanderstoßen. Kurvenscheiben 38 für einen Schlittenhub von 40 mm, führen konstruktiv zu einer Minimalbreite der Gehäusekästen 10 von 176 mm. Größere Kurvenscheiben, z.B. für einen Schlittenhub von 50 mm, würden zu einer Gehäusekastenbreite von ca. 200 mm führen.

In den Seitenwänden der Gehäusekästen 10 sind Bohrungen 40 vorgesehen, sodaß benachbarte Gehäusekästen 10 miteinander einfach verschraubt werden können, wie dies mit Maschinenschrauben 42 in FIG. 2 veranschaulicht ist. Paßfedern 44 in außenseitigen Nuten der Gehäusekästen 10 dienen der exakten Führung.

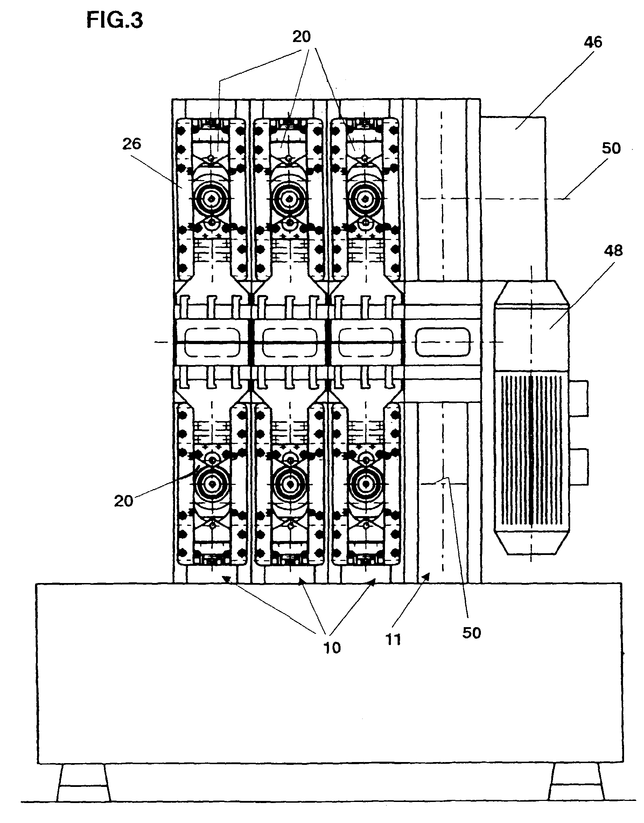

FIG. 3 veranschaulicht eine erste Ausbildung einer Blechbearbeitungs- und Montagemaschine mit vier zusammengeschraubten Gehäusekästen, wobei drei Gehäusekästen 10 mit Schlittenaggregaten bestückt sind und ein endseitig angeschraubter Gehäusekasten 11 einen Antriebsverteilungskasten darstellt, der die oberen und unteren Antriebswellen (vgl. FIG. 8) miteinander antriebsmäßig verbindet. An den oberen Gehäuseteil des Antriebsverteilungskastens 11 ist ein Winkelgetriebe 46 angeschraubt, das von einem Elektromotor 48 angetrieben wird.

Längs der geometrischen Achsen 50 werden Antriebswellen durch die Naben der Antriebsräder 36 der Winkelgetriebe 24 hindurch gesteckt, wodurch alle Biegeaggregate antriebsmäßig mit dem Motor 48 verbunden sind.

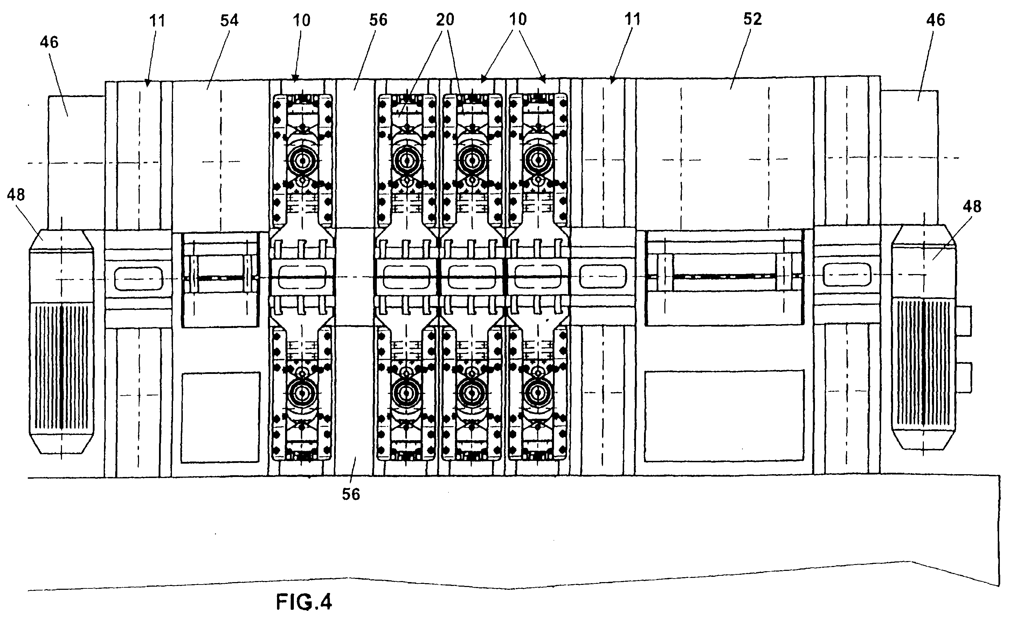

FIG. 4 veranschaulicht eine größere Bearbeitungsmaschine, die jedoch aus den gleichen Grundbaueinheiten, nämlich den Gehäusekästen 10 und Antriebsverteilungskästen 11 zusammengesetzt ist. Zusätzlich sind noch zwei Stanzpressen 52, 54 in das Modulsystem integriert. Das so aufgebaute Gesamtgehäuse weist beidseitig je einen motorischen Antrieb auf.

Zwischen zwei Gehäusekästen 10 sind Distanzblöcke 56 angeordnet, die die notwendigen Durchgänge für die Antriebswellen aufweisen. Mittels dieser Distanzblöcke 56 wird es möglich, für die Schlittenaggregate des links dargestellten Gehäusekastens 10 größere Kurvenscheiben zu verwenden. Außerdem lassen sich durch solche Distanzblöcke 56 die Raster- und Schrittlängen entsprechend der zu verformenden Werkstücke verändern.

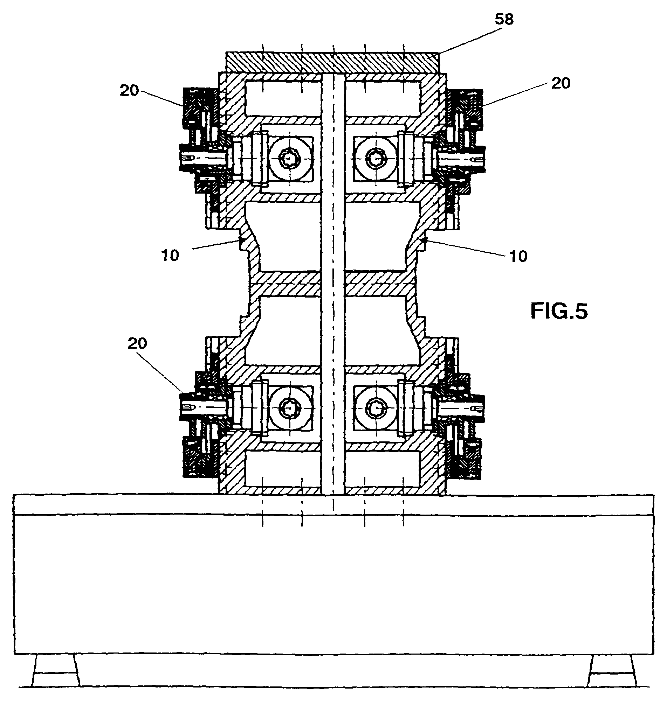

FIG. 5 zeigt eine vertikale Schnittansicht durch ein Twingehäuse, das aus einer vorderen Reihe Gehäusekästen 10 und einer hinteren Reihe Gehäusekästen 10 besteht, wobei die Gehäusekästen beider Reihen mit der Bodenwand auf einem Unterbau aufgeschraubt werden, während deckseitig beide Gehäusekastenreihen durch eine Verbindungsplatte 58 miteinander verschraubt sind. Das so gebildeter Gehäuse trägt also an der Vorderseite und an der Rückseite Schlittenaggregate 20. Gemäß Figuren 5 und 6 erstreckt sich die Verbindungsplatte 58 über beide Gehäusekastenreihen. Alternativ könnte auch für jedes Paar vorderer und hinterer Gehäusekästen 10 eine eigene, entsprechend schmalere, Verbindungsplatte vorgesehen werden.

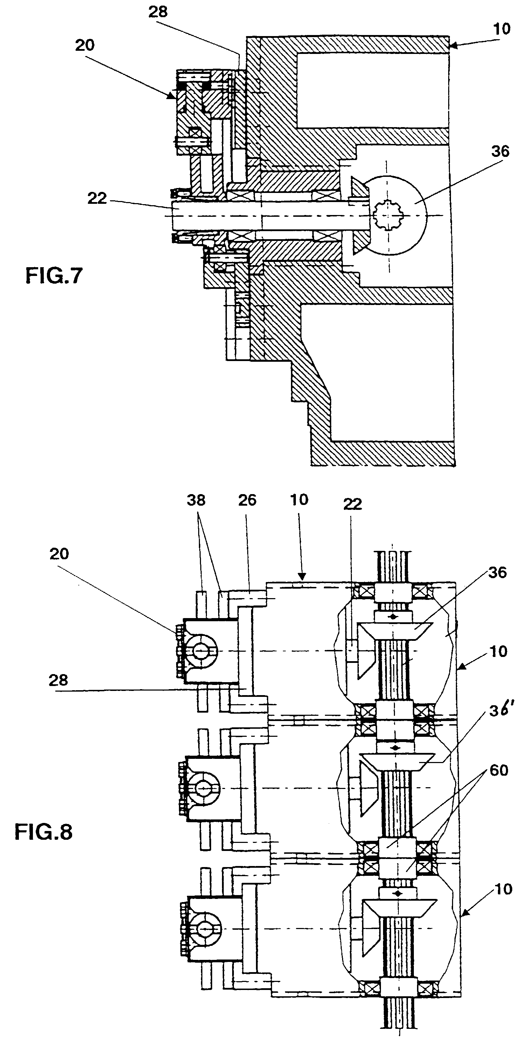

Die Figuren 7 und 8 veranschaulichen eine vereinfachte Ausführungsform einer Reihe Gehäusekästen 10, bei der als, in einem Getriebegehäuse untergebrachten Winkelgetriebe 24 zwei separate Kegelräder verwendet werden. Die Vielkeilwelle wird hier nicht wie bei der vorbeschriebenen Ausführungsform von den Antriebsrädern 36 des vom Gehäuse gelagerten Winkelgetriebes 24 gelagert sondern von separaten Lagerringen 60, die in, in den Seitenwänden der Gehäusekästen 10 angeordneten Wälzlagern gelagert sind. Die Antriebsräder 36 sind auf der Antriebswelle verschiebbar und können damit außer Eingriff mit dem Abtriebsrad gebracht werden, wie bei 36' gezeigt ist.

In den Zeichnungen weist die Frontwand 18 des Gehäusekastens 10 nur jeweils die obere und die untere Öffnung für die Abtriebswellen bzw. den Abtriebsteil des Winkelgetriebes 24 auf. Es ist aber ohne weiteres möglich, die Werkzeugaufnahmefläche 30 nicht vollflächig sondern in Form eines Rechteckringes auszubilden und den von ihr begrenzten Zentralbereich als Durchbruch zu gestalten, sodaß z.B. ein Mittelstempelbetrieb möglich ist.

## Patentansprüche

1. Maschine zum Stanzen, Biegen und Montieren von Blechteilen, mit einer oberen Reihe von Gehäuseteilen (14) und einer unteren Reihe von Gehäuseteilen (16), wobei die oberen und unteren Gehäuseteile (14, 16) jeweils horizontal ausgerichtet, aneinander befestigt sind und jeweils ein oberes Gehäuseteil (14) mit einem unteren Gehäuseteil (16) lotrecht ausgefluchtet ist, weiterhin mit einer, die oberen Gehäuseteile (14) durchsetzenden und in diesen gelagerten oberen Antriebswelle und einer entsprechend angeordneten und gelagerten unteren Antriebswelle und mit mindestens einem, mit der jeweiligen Antriebswelle gekuppelten oder kuppelbaren Winkelgetriebe (24) in jedem Gehäuseteil (14, 16) und mit mindestens einem Schlittenaggregat (20) nebst Schlittenführung (26) an jedem Gehäuseteil (14, 16), wobei das Schlittenaggregat (20) mit einer Abtriebswelle (22) des Winkelgetriebes (24) in Eingriff steht, **dadurch gekennzeichnet, daß** ein oberes (14) und ein unteres Gehäuseteil (16) Bestandteile eines einheitlichen Gehäusekastens (10) mit minimal möglicher Breite sind, dessen Frontseite nicht mehr als ein oberes und ein unteres Schlittenaggregat (20) zugeordnet sind, daß die Breite des Gehäusekastens (10) im Bereich von 0 bis höchstens etwa 20% größer als die Außenbreite der Schlittenführung (26) des Schlittenaggregates (20) ist, daß in der Frontwand (18) des Gehäusekastens (10) zwischen der oberen und der unteren Schlittenführung (26) eine rechteckige umfangsgeschlossene Werkzeugaufnahmefläche (30) ausgebildet ist, daß die Abtriebswelle (22) des Winkelgetriebes (24) in Breitenmitte des Gehäusekastens (10) angeordnet ist, daß jedes Winkelgetriebe (24) ein Antriebs- und ein Abtriebsrad aufweist, daß die beiden Antriebswellen die Antriebsräder (36) der Winkelgetriebe (24) von miteinander verschraubten Gehäusekästen (10) jeweils durchsetzen und die Länge der Antriebswellen - abgesehen von einem für deren Drehantrieb notwendigen Übermaß - dem Produkt aus Breite und Anzahl der miteinander verschraubten Gehäusekästen (10, 11) entspricht.

2. Maschine nach Anspruch 1, **dadurch gekennzeichnet, daß** zwischen mindestens zwei benachbarten Gehäusekästen (10, 11) ein ggf. zweiteiliger Distanzblock (56) eingeschraubt ist.

3. Maschine nach Anspruch 1 oder 2, **dadurch gekennzeichnet, daß** die Antriebsräder (36) in den Gehäusekästen (10) gelagert sind, eine Nabe mit unrundem Querschnitt aufweisen und die als Steckwelle mit ebenfalls unrundem Querschnitt ausgebildete Antriebswelle lagern.

4. Maschine nach einem der Ansprüche 1 bis 3, **dadurch gekennzeichnet, daß** an einem endseitigen Gehäusekasten (11) ein Antriebsmotor (48) mit Winkelgetriebe (46) angeschraubt ist.

5. Maschine nach einem der Ansprüche 1 bis 4, **dadurch gekennzeichnet, daß** die Gehäusekästen (10, 11) an der der Frontwand (18) gegenüberliegenden Rückseite offen sind oder die so gebildete Öffnung von einer Abdeckplatte geschlossen ist.

6. Maschine nach einem der Ansprüche 1 bis 5, **dadurch gekennzeichnet, daß** sie eine vordere und eine hintere Gehäusekastenreihe aufweist und je ein vorderer Gehäusekasten (10) mit einem hinteren Gehäusekasten (10) mittels einer deck- und bodenseitigen Verbindungsplatte (58) miteinander verschraubt sind.

7. Maschine nach einem der Ansprüche 1 bis 6, **dadurch gekennzeichnet, daß** die Schlittenführungen (26) jeweils als direkt auf die Frontwand (18) des Gehäusekastens (10) formschlüssig aufgesetzte und aufgeschraubte Führungsleisten ausgebildet sind.

8. Maschine nach einem der Ansprüche 1 bis 7, **dadurch gekennzeichnet, daß** eine Werkzeuggrundplatte (32) direkt auf die vorzugsweise vertiefte Werkzeugaufnahmefläche (30) der Frontwand (18) aufgeschraubt ist.

9. Maschine nach einem der Ansprüche 1 bis 8, **dadurch gekennzeichnet, daß** die Werkzeugaufnahmefläche (30) aus einer Rechteckringfläche besteht, die ein Fenster in der Frontwand (18) begrenzt.

## Claims

1. Machine for stamping, bending, and fitting of sheet metal parts, with an upper row of housing parts (14) and a lower row of housing parts (16), whereby the upper and lower housing parts (14, 16) are in each case aligned horizontally, secured to one another, and in each case an upper housing part (14) is aligned vertically with a lower housing part (16), and in addition with a drive shaft, to be inserted through the upper housing parts (14) and mounted in them, and a correspondingly arranged and mounted lower drive shaft, and at least one angle drive (24) in each housing part (14, 16) coupled or capable of being coupled to the individual drive shaft and with at least one carriage device (20) as well as a carriage guide (26) in each housing part (14, 16), whereby the carriage device (20) engages with a drive shaft (22) of the angle drive (24), characterised in that an upper (14) and a lower housing part (16) are constituent parts of a unitary housing box (10) with the minimum possible width, to the front face of which not more than one upper and one lower carriage device (20) are allocated, that the width of the housing box (10) is in the range from 0 to a maximum of some 20 % larger than the outer width of the carriage guide (26) of the carriage device (20), that in the front wall (18) of the housing box (10), between the upper and lower carriage guide (26), a rectangular circumferentially-enclosed tool accommodation surface (30) is formed, that the drive shaft (22) of the angle drive (24) is arranged in the centre of the width of the housing box (10), that each angle drive (24) features a drive wheel and a driven wheel, that the two drive shafts pass through the drive wheels (36) of the angle drive (24) of the housing boxes (10) which are bolted to one another, and the length of the drive shafts, apart from an over-dimension required for their rotational drive, corresponds to the product from the width and number of housing boxes (10, 11) which are bolted together.

2. Machine according to Claim 1, characterised in that, between at least two adjacent housing boxes (10, 11) a spacer block (56), possible of two parts, is screwed in place.

3. Machine according to Claim 1 or 2, characterised in that the drive wheels (36) are mounted in the housing boxes (10), feature a hub with an out-of-round cross-section, and mount the drive shaft, likewise designed with an out-of-round cross-section, as an insertion shaft.

4. Machine according to one of Claims 1 to 3, characterised in that a drive motor (48) is bolted to the angle drive (46) at an end-side housing box (11).

5. Machine according to one of Claims 1 to 4, characterised in that the housing boxes (10, 11) are open at the rear, located opposite the front wall (18), or the aperture so formed in closed by a cover plate.

6. Machine according to one of Claims 1 to 5, characterised in that it features a front and a rear row of housing boxes (10) with one rear housing box (10) bolted to another by means of a connecting plate (58) on the cover side and the base side.

7. Machine according to one of Claims 1 to 6, characterised in that the carriage guides (26) are formed in each case as guide strips located and bolted directly in positive fit on the front wall (18) of the housing box (10).

8. Machine according to one of Claims 1 to 7, characterised in that a tool baseplate (32) is bolted directly onto the tool accommodation surface (30) of the front wall (18), said surface being for preference deepened.

9. Machine according to one of Claims 1 to 8, characterised in that the tool accommodation surface (30) consists of a square ring surface, which delimits a window in the front wall (18).

## Revendications

1. Machine pour découpage, pliage et montage de pièces de tôle, comprenant une rangée supérieure d'éléments boîtiers (14) et une rangée inférieure d'éléments boîtiers (16), les éléments boîtiers supérieurs et inférieurs (14, 16) étant orientés horizontalement, fixés les uns aux autres et un élément boîtier supérieur (14) étant chaque fois alignés d'aplomb avec un élément boîtier inférieur (16), et comprenant encore un arbre d'entrée traversant les éléments boîtiers supérieurs (14) et monté dans ces derniers, et un arbre d'entrée inférieur disposé et monté de manière correspondante, et au moins un engrenage conique (24) couplé ou couplable à l'arbre d'entrée respectif dans chaque élément boîtier (14, 16), et au moins un ensemble à coulisseau (20) avec glissière de coulisseau (26) sur chaque élément de boîtier (14, 16), l'ensemble à coulisseau (20) engrenant avec un arbre de sortie (22) de l'engrenage conique (24), caractérisée en ce qu'un élément boîtier supérieur (14) et un élément boîtier inférieur (16) sont des composants d'un châssis de boîtier (10) unitaire de la plus petite largeur possible, à la face frontale duquel ne correspondent pas plus qu'un ensemble à coulisseau supérieur et inférieur (20), en ce que la largeur du châssis de boîtier (10) est de l'ordre de 0 à maximum 20 % plus grande que la largeur extérieur de la glissière de coulisseau (26) de l'ensemble à coulisseau (20), en ce que la paroi frontale (18) du châssis de boîtier (10) comprend une face de réception d'outil (30) rectangulaire à périmètre fermé entre les glissières de coulisseau supérieure et inférieure (26), en ce que l'arbre de sortie (22) de l'engrenage conique (24) est disposé au milieu de la largeur du châssis de boîtier (10), en ce que chaque engrenage conique (24) présente un pignon menant et un pignon mené, en ce que les deux arbres d'entrée traversent les pignons menants (36) des engrenages coniques (24) de châssis de boîtiers (10) vissés les uns aux autres, et en ce que la longueur des arbres d'entrée correspond au produit de la largeur et du nombre des châssis de boîtiers (10, 11) vissés les uns aux autres, mise à part une surdimension nécessaire à leur entraînement en rotation.

2. Machine selon la revendication 1, caractérisée en ce qu'un bloc distanceur (56) éventuellement en deux parties est vissé entre au moins deux châssis de boîtier (10, 11) voisins.

3. Machine selon la revendication 1 ou 2, caractérisée en ce que les pignons menants (36) sont montés dans les châssis de boîtier (10), en ce qu'ils présentent un moyeu de section transversale non circulaire et logent l'arbre d'entrée réalisé sous forme d'arbre d'emboîtement de section transversale également non circulaire.

4. Machine selon l'une des revendications 1 à 3, caractérisée en ce qu'un moteur d'entraînement (48) à engrenage conique (46) est vissé à un châssis de boîtier (11) se trouvant à une extrémité.

5. Machine selon l'une des revendications 1 à 4, caractérisée en ce que les châssis de boîtier (10, 11) sont ouverts sur la face arrière opposée à la paroi frontale (18) ou en ce que l'ouverture ainsi formée est fermée par une plaque de recouvrement.

6. Machine selon l'une des revendications 1 à 5, caractérisée en ce qu'elle présente une rangée de châssis de boîtiers avant et arrière, et en ce qu'un châssis de boîtier avant (10) est vissé à un châssis de boîtier arrière (10) au moyen d'une plaque de liaison (58) adjacente aux faces supérieure et inférieure.

7. Machine selon l'une des revendications 1 à 6, caractérisée en ce que les glissières de coulisseau (26) sont réalisées sous forme de barres de guidage posées par adaptation de forme et vissées directement sur la paroi frontale (18) du châssis de boîtier (10).

8. Machine selon l'une des revendications 1 à 7, caractérisée en ce qu'un socle d'outil (32) est vissé directement sur la face de réception d'outil (30), de préférence approfondie, de la paroi frontale (18).

9. Machine selon l'une des revendications 1 à 8, caractérisée en ce que la face de réception d'outil (30) est une surface torique à section carrée qui délimite une fenêtre dans la paroi frontale (18).
